(19) **Europäisches Patentamt / European Patent Office / Office européen des brevets**

(11) **EP 2 620 749 B1**

(12) # EUROPEAN PATENT SPECIFICATION

(45) Date of publication and mention
of the grant of the patent:
**26.07.2017 Bulletin 2017/30**

(51) Int Cl.:
*G01C 21/32* *(2006.01)*    *G01C 21/36* *(2006.01)*

(21) Application number: **13152669.1**

(22) Date of filing: **25.01.2013**

(54) **Indexing system of spatial information for combined SOI object and content**

Indexierungssystem von räumlichen Informationen für kombinierte SOI-Objekte und -Inhalte

Système d'indexation d'informations spatiales pour objet et contenu SOI combinés

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.01.2012 US 201261591143 P**

(43) Date of publication of application:
**31.07.2013 Bulletin 2013/31**

(60) Divisional application:
**16201183.7 / 3 150 962**

(73) Proprietor: **HYUNDAI MOTOR COMPANY
Seoul 137-938 (KR)**

(72) Inventors:
• **Park, Cheol Woo
138-751 Seoul (KR)**
• **Kim, Hong Hoi
305-750 Daejeon (KR)**

(74) Representative: **Isarpatent
Patent- und Rechtsanwälte Behnisch Barth
Charles
Hassa Peckmann & Partner mbB
Friedrichstrasse 31
80801 München (DE)**

(56) References cited:
**WO-A1-2012/000530    WO-A2-01/33395**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 620 749 B1

**Description**

**TECHNICAL FIELD**

The present disclosure relates to an indexing system that provides a rapid and effective search/retrieval method for a combined space of interest (SOI) object and content. Specifically, the present disclosure relates to an indexing system that provides a rapid retrieval of location information by using an inverted file database of index information which is a combination of location information and keyword contents. A space of interest (SOI) refers to a collection of data about a space of people's interest or use. An SOI is made up of a point, line and/or plane and has a unique identifying data. An SOI object refers to a structure which binds spatial information, identifying data and property information (e.g., color, thickness of line, type of line, time of exposure, allowed time of use, control of permission to access) of an SOI.

**BACKGROUND**

A keyword-based retrieval/indexing method is a commonly known retrieval method in which a keyword is analyzed in the form of natural language. In the method, keywords are extracted from a document for retrieval, and during the process the keywords and relevant documents thereto are stored in an inverted file structure. When searching by using keywords, document contents associated with the given keywords are extracted from the inverted file structure, and then a search result is shown to a user with an assigned priority. The keyword-based retrieval/indexing method has been improved in the form of subject-based information retrieval in which a search result is shown in accordance with a relevance to a keyword of a subject.

There has not been much progress, however, in the method for searching location or area based information. For example, it is only known from document WO 01/333 95 A2 to provide a grid (i.e. tile) based indexing of spatial objects data which is a "spatial operation". Such conventional indexing is effected using "map tile numbers", in order to achieve time efficient retrieval. Furthermore, the document also simply describes two-dimensional spatial objects with reference to a situation where the SOI objects cover a plurality of map tiles.

**SUMMARY**

Therefore, the object of the present invention is to provide an indexing system for an effective retrieval of combined SOI object and content. This object is solved by an indexing system of claim 1 and further advantageous embodiments and improvements are listed in the dependent claims. As will be seen below some of the aspects of the present invention also provide the advantage that an indexing system for a rapid and effective retrieval of location information can be provided using a map tile number according to Tile Map Service (TMS). Further, not falling under the invention, the present disclosure provides an indexing system for a rapid and effective search by performing mapping and indexing of additional SOI objects or contents to an SOI object. Before describing the advantageous and preferred embodiments of the invention, hereinafter certain aspects of the invention or usable in connection with the invention are listed below.

One aspect of the present disclosure, not falling under the invention as claimed, provides an indexing system of SOI object that includes: a location data extractor configured to set a minimum boundary area of SOI object (hereinafter, "Minimum Bounding Rectangle") and obtain at least one center point coordinate from the minimum bounding rectangle; a map tile number converter configured to perform a spatial operation between at least one of the center point coordinates and map tile number, and to perform mapping of the SOI object onto corresponding map tile number if at least one of the center point coordinates exists on the TMS; and a location based service (LBS) indexer configured to store a plurality of SOI objects mapped onto corresponding map tile number in the form of an inverted file database.

According to an embodiment of the present invention the SOI object is a combination of coordinates covering a certain boundary.

Further, another aspect of the present disclosure is that the center point coordinates may be obtained by using at least one of arithmetic mean or weighted average.

According to a further exemplary aspect of the present disclosure, not falling under the invention, the map tile number converter performs mapping of the SOI objects onto a plurality of map tile numbers if at least one center point coordinate is positioned at a map tile having a map tile number.

According to another exemplary aspect of the present disclosure, the LBS indexer receives keyword index information to perform mapping thereof in addition to a plurality of SOI objects mapped according to map tile numbers.

The present disclosure provides as another aspect, which does not fall under the invention, an indexing system of SOI object that includes: a location data extractor configured to set a minimum boundary area (hereinafter, "Minimum Bounding Rectangle") of a first SOI object and obtain at least one center point coordinate from the minimum bounding rectangle; a map tile number converter configured to perform mapping of the first SOI object onto map tile number of a map including the at least one center point coordinate; and a location based service (LBS) indexer configured to construct information for the mapped first SOI object in the form of a database. The LBS indexer may perform indexing of information for a distance, a direction, and relationship of a second SOI object with respect to the first SOI object and provide a search result for the second SOI object associated with the first SOI object together with a search result for the first SOI object when the search for the first SOI object is requested. Each of the first SOI object and the second SOI object may be a collection of coordinates having constant areas. The center point coordinates may be obtained by using at least one of arithmetic mean or weighted average.

One other aspect of the present disclosure, not falling under the invention, concerns the fact that the map tile number converter may perform mapping of the first SOI object onto at least one of a plurality of map tile numbers when the map including the at least one center point coordinate spans the plurality of map tile numbers. The LBS indexer may perform additionally mapping of keyword index information onto the first SOI object mapped to the map tile number or additionally perform mapping of a content onto the first SOI object when coordinate information included in the content is included in the minimum boundary rectangle of the first SOI object.

In contrast with a traditional retrieval method of geographic information service (GIS) using POI that only displays X, Y coordinates, the present disclosure provides a method for retrieving SOI object that displays location information within a certain boundary.

Further, the present disclosure provides an indexing system, not falling under the invention, using map tile numbers, in which when searching spatial information, a map tile number is first extracted to obtain relevant SOI object information of the corresponding map tile number, thereby enabling a rapid and effective retrieval.

Furthermore, not falling under the invention, aspects of the present disclosure perform mapping and indexing of other SOI objects and contents associated with the SOI object, thereby improving search convenience for the other SOI objects associated with the SOI object and solving limitations of the keyword-based search method in the related art.

## BRIEF DESCRIPTION OF THE DRAWINGS

FIG. 1 is an exemplary diagram illustrating a geographic information retrieval system using POI information.
FIG. 2 is a block diagram schematically illustrating a configuration of an indexing system of SOI object according to the present disclosure.
FIG. 3 is an exemplary diagram illustrating a method for mapping of SOI onto map tile numbers when SOI object is spread over a plurality of map tile numbers.
FIG. 4 is an exemplary diagram illustrating a method of adding map tile number.
FIG. 5 is an exemplary diagram illustrating information correlating a plurality of SOI objects which exist on a space.

## DETAILED DESCRIPTION

The present disclosure will be described in detail with reference to the accompanying drawings, in which the same reference numerals will be used to refer to the same parts. If considered unnecessary for understanding the principles of the present disclosure, detailed descriptions of other portions of known components will be omitted so as not to obscure the invention. Hereinafter, the embodiments of the invention as relating to the claims will be specifically described. However, in connection with these embodiments also other features not directly relating to the invention but serving the further illustration and understanding of the framework of the invention will also be described.

Subject-based keyword retrieval/indexing method has been used for a retrieval system of geographic information such as point of interest (POI).

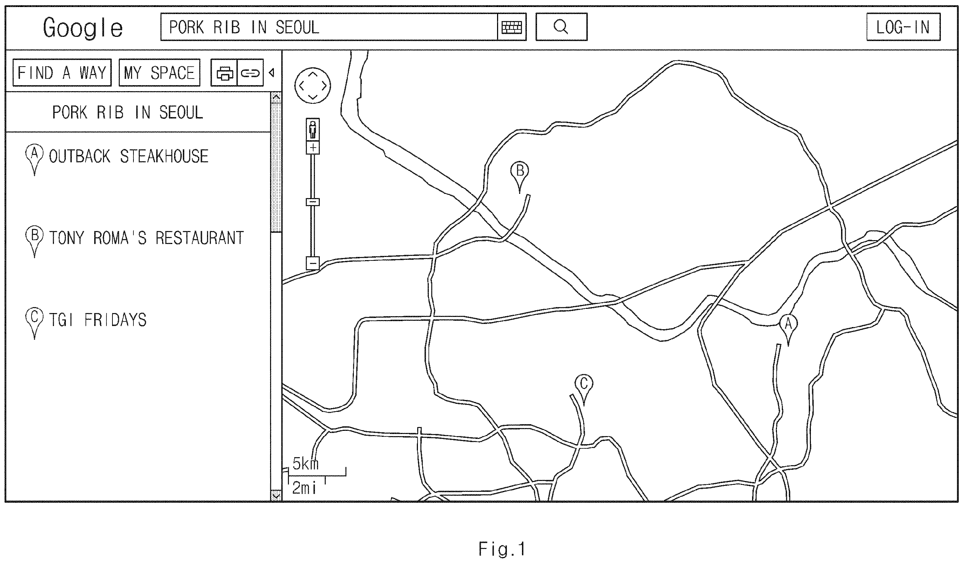

FIG. 1 is an exemplary diagram illustrating a geographic information retrieval system using POI information.

For example, when searching geographic information by using a word "pork rib in Seoul," one keyword "Seoul" and the other keyword "pork rib" are retrieved respectively from the inverted file structure, and the overlapped POI information (here, information on restaurants) is then extracted from each result. Geographic information of X and Y positions of, for example, (A) Outback Steakhouse, (B) Tony Roma's Restaurant and (C) TGI Fridays, is extracted and displayed on a map (here, a map of surrounding areas of Seoul. The X, Y positions of extracted geographic information of all three A, B, and C are marked on the map.

However, geographic information retrieval system using POI basically adopts the keyword-based retrieval method, which merely displays on the map X, Y coordinate values obtained from the retrieval result of POI information.

Further, location-based data using POI information is based on a certain point displayed with X and Y coordinateS values as a unit. In other words, when searching a certain location, location-based service using POI data only displays a relevant point according to a coordinate (for example, when searching a building, a coordinate of the entrance of the building is only_displayed), such information as the size of the area or sub-facilities may not be shown exactly. Hence, the spatial concept of SOI has been introduced in an effort to provide an SOI-based geographic information service.

However, there are currently no effective methods for searching SOI object. That is, a keyword-based retrieval/indexing method does not provide effective search of SOI. In addition, geographic information retrieval service using POI is not suitable to be applied for an SOI as POI information is not based on a spatial concept.

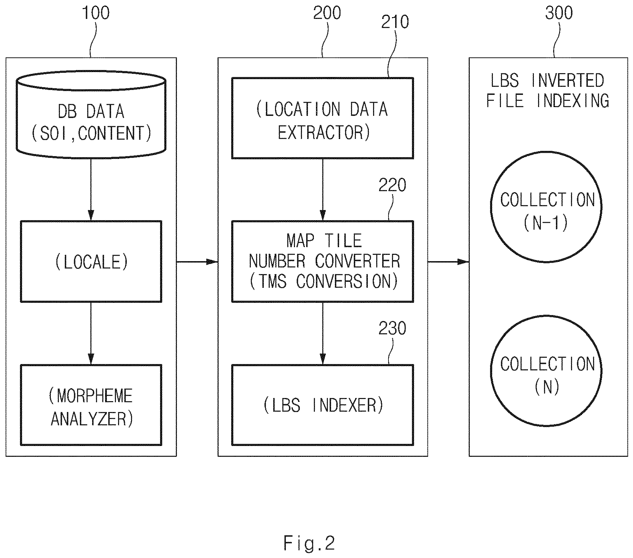

FIG. 2 is a block diagram schematically illustrating a configuration of an indexing system of SOI object according to the present disclosure.

The indexing system for retrieval of SOI object according to the present disclosure includes a keyword indexer 100, an LBS information indexer 200, and an LBS inverted file indexing module 300.

The keyword indexer 100 performs a process of extracting SOI object or content data stored in SOI database or content database, followed by a process of normalization through Locale.

Keyword index information is then extracted by analyzing morphemes through morpheme analyzer, and tagging parts of speech. The detailed description of the internal operation of the keyword indexer 100 will be omitted as it is performed in the same way as the conventional keyword search/index method.

The LBS information indexer 200 includes a location data extractor 210, a map tile number converter 220, and an LBS indexer 230.

The location data extractor 210 uses location information of SOI object to extract a Minimum Bounding Rectangle (MBR) and obtain a center point from the MBR thus extracted.

Location information of an SOI object covers a certain boundary within which information of X, Y position is displayed. The SOI information may be shown in the form of a simple rectangle, a curve, or an irregular form.

Information value of X, Y position within a certain boundary is extracted from the SOI object having such various forms to obtain an MBR.

Accordingly, an MBR may be defined with RECTANGLE (Xmin, Ymin, Xmax, Ymax) values.

The RECTANGLE ($X_{min}$, $Y_{min}$, $X_{max}$, $Y_{max}$) values obtained from an MBR are then used to obtain a center point (X, Y) that represents the relevant SOI object information. Here, the center point (X, Y) may be obtained from arithmetic mean calculated with an arithmetic expression of $\left( X_{min} + \dfrac{X_{max} - X_{min}}{2}, Y_{min} + \dfrac{Y_{max} - Y_{min}}{2} \right)$.

According to a preferred embodiment of the present disclosure, an index point (center point) of the space of interest can be modified to reflect one or more factors such as the popularity of local tiles and/or user activity in local tiles. Such modifications increase the likelihood that an SOI spanning multiple tiles will be indexed within a tile that is popular and/or well-reviewed by other users. Such a modified index point can be referred to a weighted index point (WIP).

In one embodiment, a weighted index point, as an example of the center point) can be calculated according to the expression $WIP = \left( X_{min} + \left(1 + S_x W\right)\dfrac{X_{max} - X_{min}}{2}, Y_{min} + \left(1 + S_y W\right)\dfrac{Y_{max} - Y_{min}}{2} \right)$, wherein $S_x$ equals the sign (*i.e.,* 1 or -1) of the *x* coordinate of the W tile minus the *x* coordinate of the SOI's arithmetic mean and $S_y$ equals the sign (*i.e.,* 1 or -1) of the y coordinate of the W tile minus the y coordinate of the SOI's arithmetic mean. The weighted tile W is the maximum of ($W_{p1}+\alpha W_{a1},...,W_{pn}+\alpha W_{an}$) 0<*W*<1. *Wp* represents the total weight of the SOI's popularity within a tile (*e.g.,* as measured by the number of reads of the SOI or the number of references to the SOI). $W_a$ represents the total weight of user activity (*e.g.,* reviewing SOIs, suggesting SOIs, sharing SOIs, and the like) within a tile. $\alpha$ is a weight value that can be arbitrarily set by an administrator to balance the influence of an user activity $W_a$ relative to an SOI's popularity $W_p$.

According to another preferred embodiment of the present disclosure, if SOI object covers a wide range of areas or buildings such that it spreads over multiple boundaries or a plurality of tile map numbers, a multitude of center points (X, Y) may be obtained for the SOI object.

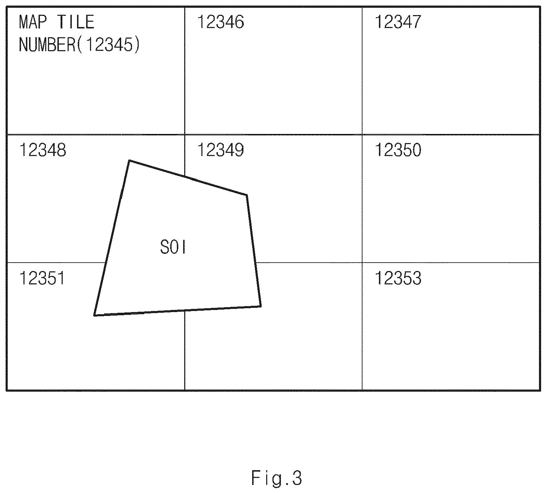

As shown in FIG. 3, SOI object covers four map tile numbers of 12348, 12349, 12351 and 12352. To determine whether a map tile number covers SOI object, a spatial operation is performed with respect to the SOI object and the map tile number. In such case as FIG.3, where map tile numbers of 12348, 12349, 12351 and 12352 cover SOI object, it is desired that the SOI object is mapped onto all of the map tile numbers that cover the SOI object.

According to another aspect of the present disclosure, not falling under the invention, the process of obtaining a center point of SOI object is omitted, and it is possible to determine only whether a map tile number covers the SOI object by performing a spatial operation with respect to the SOI object and the map tile number. According to the exemplary embodiment, an SOI object may simply be configured to be mapped onto the map tile numbers that covers the SOI object.

The map tile converter 220 performs a process of mapping the obtained value of center point X, Y onto map tile number of a map.

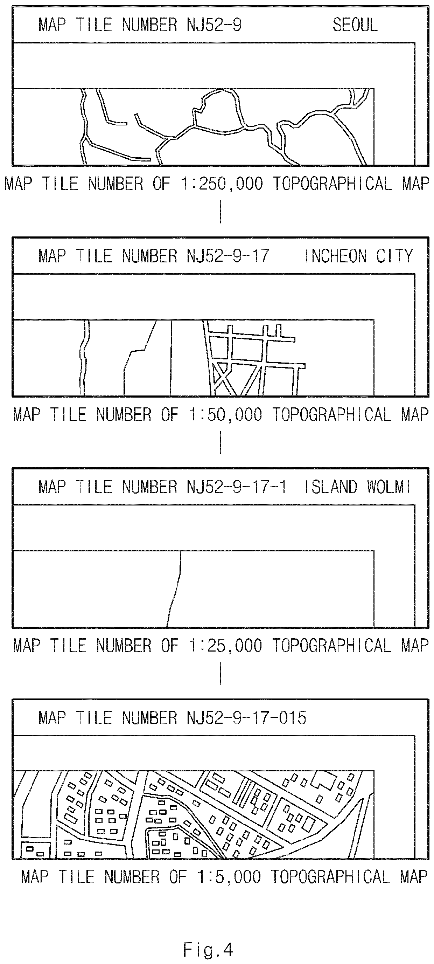

Here, the map tile number refers to identification numbers that are assigned in accordance with a level of a map. Hereinafter, brief information of the process will be described with reference to FIG. 4.

As shown in FIG. 4, according to a map level, the national capital region (Seoul), Incheon city, Wolmi Island are assigned TMS of NJ52-9 (the national capital region), NJ52-9-17 (Incheon city) and NJ52-9-17-015 (Island Wolmi), respectively. In other words, a process of assigning map tile numbers is performed in a hierarchical way according to each map level.

With respect to assigning map tile numbers, the first letter of N or S refers to the position of North and South on the earth, and then a latitude value is indicated with A, B, C, D to J, followed by a longitude value of, for example, 52 or 54 degrees. By this process, NJ52-9 is assigned to the national capital region, which is then classified into several sectors and classification numbers are given to each sector in a hierarchical way.

It is advantageous in that map tile numbers define a boundary for retrieval of geographic information, enabling a more rapid retrieval of geographic information.

For this advantage, the map tile number converter 220 performs a spatial operation to determine whether a center point of SOI object exists within a certain boundary of a map tile number, and mapping every SOI object included in accordance with the corresponding map tile number.

Here, according to a preferred embodiment of the present disclosure, SOI object having a certain boundary may be spread over a plurality of map tile numbers. In this case, not falling under the invention, SOI object may be configured to be mapped onto each corresponding map tile number.

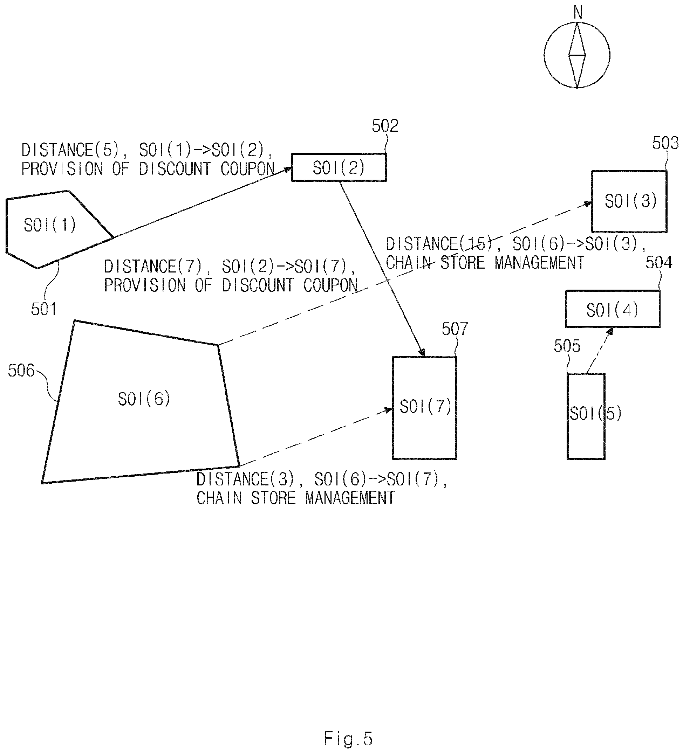

The LBS indexer 230 performs a process of configuring as a package SOI object information mapped for each map tile number, and keyword index information mapped through the keyword indexer 100, which is then stored in an LBS inverted file indexing as a database. Further, the LBS indexer 230 may perform indexing a plurality of SOI subjects according to a distance, direction, and relationship between SOI objects and store relationship information in a database. This will be described with reference to FIG. 5.

FIG. 5 illustrates information correlating a plurality of SOI subjects which exist on a space. For example, SOI(2) is positioned to be away distance 5 (for example, 5 Km) from SOI(1) in a northeast direction (for example, 30 degrees) and suppose that when showing the receipt issued by SOI(1), SOI(2) may provide a discount coupon (partnership discount). Indexing for SOI(2) may be performed on the basis of SOI(1) using the relationship information and an indexing result may be used in search and vice versa. This relationship may be defined as R={(distance), (direction), (relationship name)}. For example, SOI(2)=R*SOI(1) and here, the value of R becomes {5, 30, partnership discount}. In FIG. 5, SOI(7) may be defined to have the relationship {3, 15, chain store} with respect to SOI(6).

Table 1 shows a portion of a DB and shows a list for key values of different SOIs having an SOI identifier (ID) and information associated with the SOI ID (that is, distance, direction, relationship). For example, when the SOI ID is 3 (SOI(3) illustrated in FIG. 5), the key value becomes '2739799053167498770'. When SOI ID is 7, a key value is the same as the key value when SOI ID is 3. That is, SOI(3) and SOI(7) are has same information indicating another SOI (it can be seen FIG. 5 that the another SOI is SOI(6)).

<Table 1>

| Key | Value |
|---|---|
| SOI ID | SOI Relation Num for SOI ID |
| 3 | 2739799053167498770 |
| 2 | 2739799053167498771 |
| 7 | 2739799053167498770 |
| 4 | 2739799053167498763 |

Table 2 shows a portion of a DB and shows a list for key values and SOI IDs associated with the key values. For example, it can be seen that the SOI ID associated with '2739799053167498770' which is a key value of SOI(6) are SOI(3) and SOI(7). In the similar manner, it can be seen that the SOI ID associated with '2739799053167498771' is SOI(2) and SOI ID associated with '2739799053167498763'is SOI(4).

<Table 2>

| Value List | Key | | | |
|---|---|---|---|---|
| SOI Relation Num for SOI ID | SOI ID | | | |
| 2739799053167498770 | 3 | 7 | | |

(continued)

| Value List | Key | | | |
|---|---|---|---|---|
| 2739799053167498771 | 2 | | | |
| 2739799053167498763 | 4 | | | |
| ... | ... | ... | ... | ... |

The LBS indexer may additionally perform SOI automatic mapping and generate a search index with respect to copyright contents generated in mobile devices, and the like; for example, suppose that the user captures food in a restaurant and uploads the captured image to a system or writes a review for the restaurant and uploads the captured image with the review. In the search system, assuming that information such as a restaurant's name is not included in the photo (or metadata of the photo) or the review, it is impossible to search the photo or the review when a restaurant's name or a phone number is searched. That is, the search method in the related art performs indexing for the information using a Vector space model as a text matching method and performs search using the indexed information. There are limitations in the search method that the information is not used in the index search when the matched text is not included in the information.

However, when the user takes a picture in a restaurant or writes and uploads a review, the LBS indexer according to an exemplary embodiment of the present disclosure performs mapping and indexing of SOI object corresponding to coordinate information of a global positioning system (GPS) included in the photo or coordinate information included in the review (obtained from position information of a mobile apparatus or coordinate information of SOI which is a target of the review) and the content, thereby enabling search of contents associated with the SOI object without correlation matched with text and the like between the contents and SOI (even when no information for an SOI title included in the content). That is, the contents such as the image captured by the user or the review written by the user include position information such as the GPS coordinate information, if the contents are uploaded to the system by the user, the system which receives the contents performs mapping of the contents to be automatically uploaded onto the SOI object and immediately performs indexing of the contents on the basis of the mapped SOI object when the uploading of the contents is completed, thereby using an indexing result in search. The mapping and indexing process may be performed by the above-described LBS indexer.

Since other services are represented not with area information such as SOI but with SOI object such as a restaurant as coordinate information of a POI type, it is impossible to perform mapping between a content and a space as long as the indicated coordinate information (X, Y) is not accurately identical with the content. In particular, variables for X, Y coordinates in the general programming language are defined as double functions (for example, double x, y) and thus the number of up to fifteen decimal points are used to specify coordinates on characteristic of the function. Therefore, the probability of finding a place which points are identical is extremely low. However, when the coordinate information included in the contents is included within the minimum bounding rectangle of the SOI object, the present disclosure performing mapping and indexing of the contents onto SOI subject, thereby enabling search for the content having no correlation for the SOI subject in terms of text.

Further, the LBS indexer may combine the above-described multiple indexing processes in various manners to perform effective search. The mapping service may be provided to the user in various manners. Therefore, when the mapping service is not optimized in a manner using map tile number, for example, even in the method of providing a map using scaling change according to a zoom in/out function, the indexing function provided in the LBS indexer may be separately provided.

The indexing system according to the present disclosure provides a rapid and effective retrieval of location information, as a map tile number is first extracted to obtain relevant SOI object information within the map tile number.

SYMBOL OF EACH OF THE ELEMENTS IN THE FIGURES

**FIGURE 2**

100 : keyword indexer

200 : LBS information indexer

210 : Location Data Extractor

220 : Map Tile Number Converter

230 : LBS Indexer

300 : LBS inverted file indexing module

**FIGURE 5**

501:  SOI(1)
502:  SOI(2)
503:  SOI(3)
504:  SOI(4)
505:  SOI(5)
506:  SOI(6)
507:  SOI(7)

**Claims**

1.  An indexing system of space of interest (SOI) defining at least a two-dimensional object, the system comprising:

    1.1 a location data extractor (210) configured to calculate an index point for the space of interest;
    1.2 a map tile number converter (220) configured to map the index point to a tile that lies within a plurality of tiles, the tile including the at least one index point; and
    1.3 an indexer (230) configured to index the space of interest (SOI) within the determined tile,
    1.4 wherein the location data extractor (210) is configured to calculate the index point by:

    1.4.1 creating a minimum bounding rectangle (MBR) that encompasses the space of interest (SOI);
    1.4.2 determining a center of the minimum bounding rectangle (MBR); and
    1.4.3 returning the center of the minimum bounding rectangle (MBR) as the index point for the space of interest (SOI).

2.  The indexing system of claim 1, wherein the SOI object is a combination of coordinates covering a certain boundary.

3.  The indexing system of claim 1, wherein:

    the minimum bounding rectangle is defined by the minimum X coordinate ($X_{min}$) of the space of interest (SOI), the minimum Y coordinate ($Y_{min}$) of the space of interest, the maximum X coordinate ($X_{max}$) of the space of interest (SOI), and the maximum Y coordinate ($Y_{max}$) of the space of interest (SOI); and
    the center of the minimum bounding rectangle is defined as

$$\left( X_{min} + \frac{X_{max} - X_{min}}{2} , Y_{min} + \frac{Y_{max} - Y_{min}}{2} \right).$$

4.  The indexing system of SOI object of claim 1, wherein the LBS indexer (230) receives keyword index information to perform mapping thereof in addition to a plurality of SOI objects mapped onto corresponding map tile numbers.

5.  A method for indexing a space of interest (SOI) defining at least a two-dimensional structure, the method comprising the following steps:

    5.1 calculating an index point for the space of interest;
    5.2 determining which tile the index point lies within amongst of a plurality of map tiles; and
    5.3 indexing the space of interest within the determined tile;
    5.4 wherein calculating the index point comprises

5.41 creating a minimum bounding rectangle (MBR) that encompasses the space of interest;

5.42 determining a center of the minimum bounding rectangle (MBR); and

5.43 returning the center of the minimum bounding rectangle (MBR) as the index point for the space of interest.

**Patentansprüche**

1. Indexiersystem für einen interessierenden Raum (Space of Interest, SOI), der mindestens ein zweidimensionales Objekt definiert, wobei das System Folgendes umfasst:

1.1 einen Positionsdatenextrahierer (210), der dafür ausgebildet ist, einen Indexpunkt für den interessierenden Raum zu berechnen;

1.2 einen Abbildungskachelanzahlkonverter (220), der dafür ausgebildet ist, den Indexpunkt auf eine Kachel abzubilden, die innerhalb mehrerer Kacheln liegt, wobei die Kachel mindestens einen Indexpunkt umfasst; und

1.3 einen Indexierer (230), der dafür ausgebildet ist, den interessierenden Raum (SOI) innerhalb der bestimmten Kachel zu indexieren,

1.4 wobei der Positionsdatenextrahierer (210) dafür ausgebildet ist, den Indexpunkt zu berechnen durch:

1.4.1 Erzeugen eines Mindestbegrenzungsrechtecks (Minimum Bounding Rectangle, MBR), das den interessierenden Raum (SOI) umschließt;

1.4.2 Bestimmen einer Mitte des Mindestbegrenzungsrechtecks (MBR); und

1.4.3 Zurückmelden der Mitte des Mindestbegrenzungsrechtecks (MBR) als den Indexpunkt für den interessierenden Raum (SOI).

2. Indexiersystem nach Anspruch 1, wobei das SOI-Objekt eine Kombination von Koordinaten ist, die eine bestimmte Grenze bedecken.

3. Indexiersystem nach Anspruch 1, wobei:

das Mindestbegrenzungsrechteck definiert wird durch: die Minimum X-Koordinate ($X_{min}$) des interessierenden Raumes (SOI), die Minimum Y-Koordinate ($Y_{min}$) des interessierenden Raumes, die Maximum X-Koordinate ($X_{max}$) des interessierenden Raumes (SOI) und die Maximum Y-Koordinate ($Y_{max}$) des interessierenden Raumes (SOI); und

die Mitte des Mindestbegrenzungsrechtecks definiert ist als:

$$\left( X_{min} + \frac{X_{max} - X_{min}}{2}, Y_{min} + \frac{Y_{max} - Y_{min}}{2} \right).$$

4. Indexiersystem für ein SOI-Objekt nach Anspruch 1, wobei der LBS-Indexierer (230) Stichwortindexinformationen empfängt, um deren Abbildung zusätzlich zu mehreren SOI-Objekten, die auf entsprechenden Abbildungskachelnummern abgebildet wurden, auszuführen.

5. Verfahren zum Indexieren eines interessierenden Raumes (SOI), der mindestens eine zweidimensionale Struktur definiert, wobei das Verfahren die folgenden Schritte umfasst:

5.1 Berechnen eines Indexpunktes für den interessierenden Raum;

5.2 Bestimmen, in welcher Kachel unter den mehreren Abbildungskacheln der Indexpunkt liegt; und

5.3 Indexieren des interessierenden Raumes innerhalb der bestimmten Kachel;

5.4 wobei das Berechnen des Indexpunktes Folgendes umfasst:

5.41 Erzeugen eines Mindestbegrenzungsrechtecks (MBR), das den interessierenden Raum umschließt;

5.42 Bestimmen einer Mitte des Mindestbegrenzungsrechtecks (MBR); und

5.43 Zurückmelden der Mitte des Mindestbegrenzungsrechtecks (MBR) als den Indexpunkt für den interessierenden Raum.

**Revendications**

1. Système d'indexation d'espace d'intérêt (SOI, *space of interest*) définissant au moins un objet à deux dimensions, le système comprenant :

   1.1 un extracteur de données de localisation (210) conçu pour calculer un point d'indexation de l'espace d'intérêt ;
   1.2 un convertisseur de numéros de pavés cartographiques (220) conçu pour mettre en correspondance le point d'indexation avec un pavé qui se situe au sein d'une pluralité de pavés, le pavé incluant le(s) point(s) d'indexation ; et
   1.3 un indexeur (230) conçu pour indexer l'espace d'intérêt (SOI) à l'intérieur du pavé déterminé,
   1.4 dans lequel l'extracteur de données de localisation (210) est conçu pour calculer le point d'indexation :

      1.4.1 en créant un rectangle de délimitation minimum (MBR, *minimum bounding rectangle*) qui englobe l'espace d'intérêt (SOI) ;
      1.4.2 en déterminant un centre du rectangle de délimitation minimum (MBR) ; et
      1.4.3 en retournant le centre du rectangle de délimitation minimum (MBR) en tant que point d'indexation de l'espace d'intérêt (SOI).

2. Système d'indexation selon la revendication 1, dans lequel l'objet de SOI est une combinaison de coordonnées recouvrant une certaine limite.

3. Système d'indexation selon la revendication 1, dans lequel :

   le rectangle de délimitation minimum est défini par la coordonnée X minimum ($X_{min}$) de l'espace d'intérêt (SOI), la coordonnée Y minimum ($Y_{min}$) de l'espace d'intérêt, la coordonnée X maximum ($X_{max}$) de l'espace d'intérêt (SOI), et la coordonnée Y maximum ($Y_{max}$) de l'espace d'intérêt (SOI) ; et
   le centre du rectangle de délimitation minimum est défini par :

$$\left( X_{min} + \frac{X_{max} - X_{min}}{2}, Y_{min} + \frac{Y_{max} - Y_{min}}{2} \right).$$

4. Système d'indexation d'objet de SOI selon la revendication 1, dans lequel l'indexeur LBS (*location-based service,* service basé sur la localisation) (230) reçoit des informations d'indexation par mots clés pour en effectuer la mise en correspondance, outre une pluralité d'objets de SOI mis en correspondance avec des numéros de pavés cartographiques.

5. Procédé d'indexation d'un espace d'intérêt (SOI) définissant au moins une structure à deux dimensions, le procédé comprenant les étapes suivantes :

   5.1 calculer un point d'indexation de l'espace d'intérêt ;
   5.2 déterminer le pavé à l'intérieur duquel se trouve le point d'indexation, parmi une pluralité de pavés cartographiques ; et
   5.3 indexer l'espace d'intérêt à l'intérieur du pavé déterminé ;
   5.4 dans lequel le calcul du point d'indexation comprend les étapes consistant à :

      5.41 créer un rectangle de délimitation minimum (MBR) qui englobe l'espace d'intérêt ;
      5.42 déterminer un centre du rectangle de délimitation minimum (MBR) ; et
      5.43 retourner le centre du rectangle de délimitation minimum (MBR) en tant que point d'indexation de l'espace d'intérêt.

Fig.1

100

200   210

300

DB DATA
(SOI,CONTENT)

(LOCATION DATA
EXTRACTOR)

LBS INVERTED
FILE INDEXING

(LOCALE)

220

MAP TILE
NUMBER CONVERTER
(TMS CONVERSION)

COLLECTION
(N-1)

230

(MORPHEME
ANALYZER)

(LBS INDEXER)

COLLECTION
(N)

Fig.2

| MAP TILE NUMBER(12345) | 12346 | 12347 |
|---|---|---|
| 12348 | 12349 | 12350 |
| 12351 | | 12353 |

SOI

Fig.3

MAP TILE NUMBER NJ52-9           SEOUL

MAP TILE NUMBER OF 1:250,000 TOPOGRAPHICAL MAP

|

MAP TILE NUMBER NJ52-9-17       INCHEON CITY

MAP TILE NUMBER OF 1:50,000 TOPOGRAPHICAL MAP

|

MAP TILE NUMBER NJ52-9-17-1     ISLAND WOLMI

MAP TILE NUMBER OF 1:25,000 TOPOGRAPHICAL MAP

|

MAP TILE NUMBER NJ52-9-17-015

MAP TILE NUMBER OF 1:5,000 TOPOGRAPHICAL MAP

Fig.4

N

502

DISTANCE(5), SOI(1)->SOI(2),
PROVISION OF DISCOUNT COUPON

SOI(2)

503

SOI(3)

SOI(1)

DISTANCE(15), SOI(6)->SOI(3),
CHAIN STORE MANAGEMENT

504

DISTANCE(7), SOI(2)->SOI(7),
PROVISION OF DISCOUNT COUPON

SOI(4)

501

505

506

507

SOI(6)

SOI(7)

SOI(5)

DISTANCE(3), SOI(6)->SOI(7),
CHAIN STORE MANAGEMENT

Fig.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0133395 A2